(19) Europäisches Patentamt
European Patent Office
Office européen des brevets

(11) EP 1 765 942 B1

(12) EUROPÄISCHE PATENTSCHRIFT

(45) Veröffentlichungstag und Bekanntmachung des Hinweises auf die Patenterteilung:
**14.11.2007 Patentblatt 2007/46**

(21) Anmeldenummer: **05762942.0**

(22) Anmeldetag: **08.07.2005**

(51) Int Cl.:
***C09D 11/00*** *(2006.01)*

(86) Internationale Anmeldenummer:
**PCT/EP2005/053274**

(87) Internationale Veröffentlichungsnummer:
**WO 2006/005727 (19.01.2006 Gazette 2006/03)**

# (54) PHOTOSTABILISIERUNG VON FLUORESZENZFARBSTOFFEN

PHOTOSTABILISATION OF FLUORESCENT DYES

PHOTOSTABILISATION DE COLORANTS FLUORESCENTS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.07.2004 DE 102004033050**

(43) Veröffentlichungstag der Anmeldung:
**28.03.2007 Patentblatt 2007/13**

(73) Patentinhaber: **Jacobs University Bremen gGmbH
28759 Bremen (DE)**

(72) Erfinder:
- **NAU, Werner
28717 Bremen (DE)**
- **MOHANTY, Jyotirmayee,
Mumbai- 400 094 Maharashtra (IN)**

(56) Entgegenhaltungen:
**EP-A- 1 094 065** **US-A- 5 994 143**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 765 942 B1

Printed by Jouve, 75001 PARIS (FR)

## Beschreibung

Die Erfindung betrifft das Gebiet der Photostabilisatoren für Fluoreszenzfarbstoffe. Zudem betrifft die Erfindung Produkte, die solche Photostabilisatoren enthalten.

Fluoreszenzfarbstoffe sind organische Farbmittel, die ultraviolette Strahlung oder sichtbares Licht absorbieren und als Licht größerer Wellenlänge praktisch ohne zeitliche Verzögerung (fluoreszent) aussenden können. Fluoreszenzfarbstoffe im Sinne dieser Erfindung sind sowohl Farbstoffmoleküle als auch chromophore Bestandteile (Fluorochrome) größerer molekularer Einheiten, beispielsweise an Antikörper oder andere Biomoleküle gebundene Chromophore. Solche Fluoreszenzfarbstoffe werden in zahlreichen Gebieten der Technik eingesetzt, beispielsweise in Tagesleuchtfarben, als optische Verstärker in Farbstofflasern (Laserfarbstoffe), aber auch in einer Reihe analytischer Methoden in Chemie, Biochemie, Biologie, Klinischer Chemie und Physik. Beispielsweise werden Fluorochrome in der Fluoreszenzanalyse und als Fluoreszenzsonden zur spezifischen Markierung in der Immunologie verwendet. Eine gute Übersicht über gängige Fluoreszenzfarbstoffe und ihre Einsatzgebiete ist dem Fachmann beispielsweise bekannt aus dem Handbook of Fluorescent Probes and Research Chemicals, Richard P. Haugland, Molecular Probes.

In analytischen Anwendungen haben sich seit langem Xanthen-Farbstoffe bewährt, insbesondere die Rhodamine sowie deren Derivate wie beispielsweise das bekannteste Rhodamin 6G, und Derivate wie Rhodamin 101, Rhodamin 123, Sulforhodamin und Fluorescein. Rhodamine und Fluorescein zeichnen sich unter anderem durch eine besonders intensive Fluoreszenz aus. Eine weitere Gruppe häufig verwendeter Fluoreszenzfarbstoffe sind Cyaninfarbstoffe. Das Hauptanwendungsgebiet der Cyaninfarbstoffe ist die Photographie, wo sie als Sensibilisatoren eingesetzt werden, aber auch in organischen Farbstofflasern, und als Fluoreszenzmarker von Biomolekülen. Eine dritte und vierte, ebenfalls bedeutsame Gruppe häufig verwendeter Fluoreszenzfarbstoffe sind die Coumarin- und Oxazin-Farbstoffe.

Ein die Verwendbarkeit von Fluoreszenzfarbstoffen begrenzender Faktor ist ihre Photostabilität. Die Photostabilität von Fluoreszenzfarbstoffen beeinflusst nicht nur die Genauigkeit von Ein-Molekül-Detektionsverfahren (SMD) durch laserinduzierte Fluoreszenz und die Farbstofflaser-Chemie, sondern praktisch alle Anwendungen der Fluoreszenzspektroskopie, in denen es auf hohe Empfindlichkeit oder eine gutes Signal-Rauschen-Verhältnis ankommt. Durch lichtinduzierte chemische Veränderung verlieren Fluoreszenzfarbstoffe allmählich ihre Fähigkeit, zu fluoreszieren; dieser Vorgang wird auch Photobleichen oder Photobleaching genannt. Je langsamer das Photobleichen eines Fluoreszenzfarbstoffs bei einer gegebenen Lichteinstrahlung erfolgt, desto höher ist dessen Photostabilität. Zum theoretischen Hintergrund der Photostabilität, zu Faktoren, die die Photostabilität beeinflussen können und zu Verfahren zum Bestimmen der Photostabilität eines Fluoreszenzfarbstoffs wird der Fachmann insbesondere die Veröffentlichung von Eggeling et al, Photostability of Fluorescent Dyes for Single-Molecule Spectroscopy: Mechanisms and Experimental Methods for Estimating Photobleaching in Aqueous Solution, Kapitel 10 in Rettig et al., Applied Fluorescence in Chemistry, Biology and Medicine, Springer Verlag, ISBN 3-540-64451-2 zu Rate ziehen.

Das Photobleichen ist ein normalerweise irreversibler Prozess. Dies hat zur Folge, dass Fluoreszenzfarbstoffe nur eine verhältnismäßig geringe Haltbarkeit besitzen und in analytischen Anwendungen und in Farbstofflasern schnell verbraucht werden. Es besteht daher ein Bedarf an Mitteln und Verfahren, die Photostabilität von Fluoreszenzfarbstoffen zu verbessern.

Zur Photostabilisierung von Fluoreszenzfarbstoffen werden herkömmlicherweise eine Reihe verschiedener Substanzen eingesetzt, beispielsweise Ascorbinsäure, Cyclooctatetraen, Mercaptoethylamin, n-Propylgallat, Mowiol (Hoechst, Deutschland), Slowfade (Molecular Probes, USA), oder ProLong (Molecular Probes, USA). Damit konnte zwar für einige Fluoreszenzfarbstoffe eine Verbesserung der Photostabilität erreicht werden, diese geht jedoch häufig einher mit einer Verschlechterung der Photointensität oder wird für besonders empfindliche Anwendungen, insbesondere im Analysenbereich oder für Farbstofflaser, als nicht ausreichend empfunden.

Aufgabe der Erfindung war es daher, den Nachteilen des Standes der Technik abzuhelfen und insbesondere Mittel und Verfahren zum Verbessern der Photostabilität üblicher Fluoreszenzfarbstoffe anzugeben.

Es wurde nunmehr gefunden, dass Cucurbiturile die Photostabilität üblicher Fluoreszenzfarbstoffe erheblich steigern können. Erfindungsgemäß wird daher gelehrt, ein Cucurbituril zum Verbessern der Photostabilität eines Fluoreszenzfarbstoffs zu verwenden. Hierzu wird der zu stabilisierende Fluoreszenzfarbstoff in Kontakt mit dem Cucurbituril gebracht.

Cucurbiturile sind makrocyclische Verbindungen der allgemeinen Formel (A):

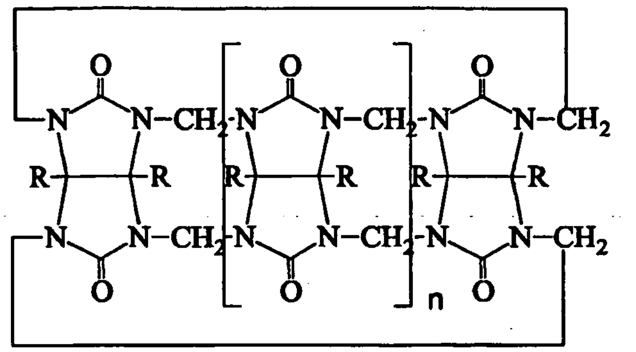

Formel (A)

wobei jedes R unabhängig von jedem anderen R bedeuten kann: H, Alkyl-, Hydroxy-, Alkoxy-. Die Grundstruktur der Cucurbiturile wurde erstmals in der Veröffentlichung W.A. Freeman, W.L. Mock und N.-Y. Shih: Cucurbituril, J. Am. Chem. Soc. 103 (1981), S. 7367- 7368 publiziert. In dieser Publikation wird auch erstmals der Name Cucurbituril für die Verbindung vorgeschlagen, die damals untersuchte Substanz wird heute Cucurbit[6]uril genannt. Herstellverfahren für Cucurbiturile sind beispielsweise aus der EP 1 094 065 A bekannt, darin ist insbesondere die Herstellung von Cucurbit [5]uril, Cucurbit[6]uril, Cucurbit[7]uril und Cucurbit[8]uril beschrieben.

Cucurbiturile waren bisher bekannt zum Entfernen von Farbstoffen aus den Abwässern der Textilindustrie. Sie werden auch am Rande erwähnt in der US 5,994,143 als kovalent gebundener, funktioneller Bestandteil bestimmter polymerer Fluoreszenzfarbstoffe, wobei sie dort lediglich die Fluoreszenzintensität des Fluoreszenzfarbstoffs erhöhen sollen, ein Einfluss auf die Photostabilität von Fluoreszenzfarbstoffen wird nicht gelehrt. Aus einer Änderung der Fluoreszenzintensität, also einer verbesserten Quantenausbeute emittierter fluoreszenter Strahlung pro eingestrahlter Strahlung, lassen sich keine Rückschlüsse auf einen möglicherweise photostabilisierenden Effekt ziehen, also auf die mittlere Zahl der Zyklen aus Lichtabsorption und Emission fluoreszenter Strahlung pro Farbstoffmolekül, bevor das Molekül seine Fluoreszenz verliert.

Das Maß der von Cucurbiturilen bewirkten Photostabilisierung eines Fluoreszenzfarbstoffs hängt unter anderem vom Verhältnis der Größe des Cucurbiturils und des Fluoreszenzfarbstoffs ab. Es ist anzunehmen, dass Cucurbiturile Einschlussverbindungen mit Fluoreszenzfarbstoffen bilden. Dem gemäß versteht es sich, dass das zur Photostabilisierung verwendete Cucurbituril in Abhängigkeit von der Größe des zu stabilisierenden Fluoreszenzfarbstoffs auszuwählen ist. Eine geringe Photostabilisierung durch ein gegebenes Cucurbituril tritt auf, wenn der Fluoreszenzfarbstoff zu klein oder zu groß ist, um vom jeweiligen Cucurbituril in Form eines Komplexes eingeschlossen zu werden. Welches Cucurbituril für einen gegebenen Fluoreszenzfarbstoff die stärkste Photostabilisierung bewirkt, kann der Fachmann durch wenige Routineversuche jeweils leicht bestimmen.

Zum Verbessern der Photostabilität eines Fluoreszenzfarbstoffs wird vorzugsweise ein Cucurbituril verwendet, das ausgewählt ist aus der Gruppe bestehend aus Cucurbit[5]uril, Cucurbit[6]uril, Cucurbit[7]uril und Cucurbit[8]uril oder einer Mischung zweier oder mehrerer dieser Cucurbiturile. Diese Cucurbiturile haben in ersten Versuchen die beste Photostabilisierung für übliche Fluoreszenzfarbstoffe gezeigt, insbesondere für Xanthen- und Cyanin-Fluoreszenzfarbstoffe.

Im Rahmen dieser Erfindung sind insbesondere bevorzugt verwendete Cucurbiturile:

Cucurbit[5]uril:
eine Substanz mit einer Struktur gemäß Formel (B):

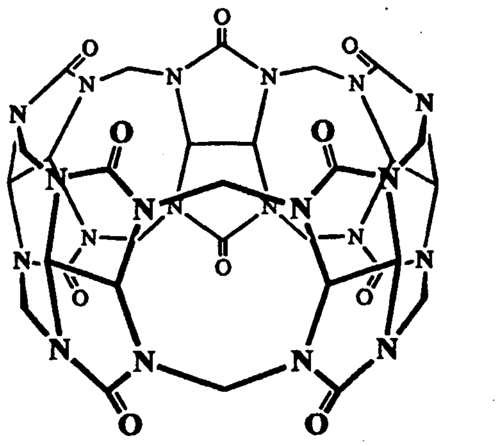

Formel (B)

Cucurbit[6]uril:
eine Substanz mit einer Struktur gemäß Formel (C):

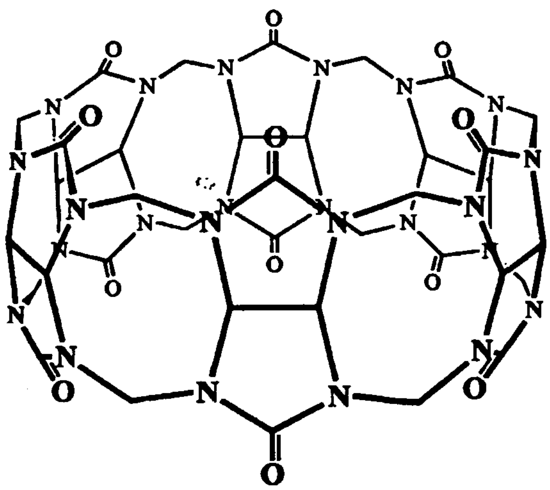

Formel (C)

Cucurbit[7]uril:
eine Substanz mit einer Struktur gemäß Formel (D):

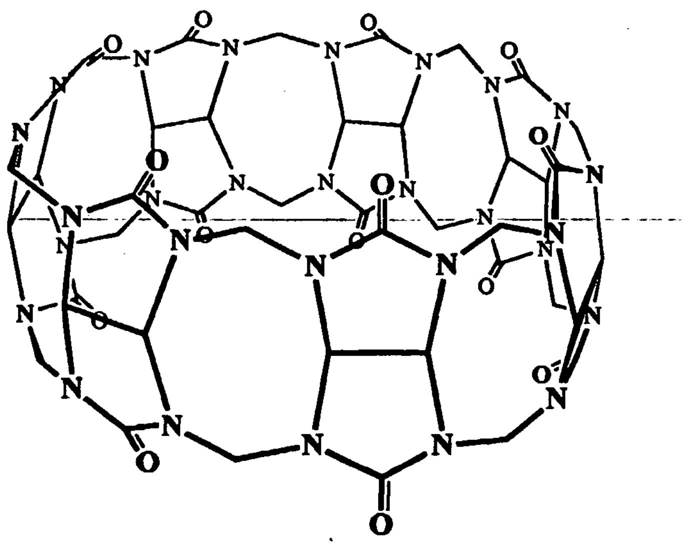

Formel (D)

Cucurbit[8]uril:
eine Substanz mit einer Struktur gemäß Formel (A), wobei n=6 und jedes R=H (Formel (E))

Die Cucurbiturile gemäß Formeln (B)-(E) zeigen nur eine geringe bis keine Verbesserung der Photostabilität anionischer Fluoreszenzfarbstoffe, z. B. für Fluorescein. Vorzugsweise werden die Cucurbiturile gemäß Formeln (B)-(E) daher nicht zum Verbessern der Photostabilität anionischer Fluoreszenzfarbstoffe verwendet. Es ist zudem bevorzugt, Cucurbiturile und insbesondere die Cucurbiturile gemäß Formeln (B)-(E) zum Verbessern der Photostabilität kationischer Fluoreszenzfarbstoffe zu verwenden.

Häufig ist es schwierig, Cucurbiturile in reiner Form zu erhalten. Gewöhnlich werden Cucurbiturile in Form von Gemischen erhalten, in denen ein oder zwei Cucurbiturile in höherer Konzentration als andere Cucurbiturile vorliegen. Es hat sich jedoch gezeigt, dass die Photostabilisierung eines Fluoreszenzfarbstoffs durch ein Cucurbituril durch die Anwesenheit eines anderen Cucurbiturils nur in geringem Maße beeinflusst wird. Dementsprechend ist es häufig nicht notwendig, zum Verbessern der Photostabilität eines Fluoreszenzfarbstoffs ein reines Cucurbituril zu verwenden, stattdessen können auch Gemische zweier oder mehrerer Cucurbiturile verwendet werden. Darüber hinaus ist es bevorzugt, Gemische mehrerer Cucurbiturile zu verwenden zum Verbessern der Photostabilitäten eines Farbstoffgemischs enthaltend mehrere Fluoreszenzfarbstoffe, und zwar insbesondere dann, wenn sich die Größen der im Farbstoffgemisch enthaltenen Fluoreszenzfarbstoffe deutlich voneinander unterscheiden. So ist es vorteilhaft einfach möglich, gleichzeitig für jeden zu stabilisierenden Fluoreszenzfarbstoff eines Farbstoffgemischs ein gutes oder das jeweils beste Cucurbituril bereitzustellen.

Die Fluoreszenzfarbstoffe, zu deren Photostabilisierung erfindungsgemäß Cucurbiturile und insbesondere die oben als bevorzugt aufgezählten Cucurbiturile Cucurbit[5]uril, Cucurbit[6]uril, Cucurbit[7]uril und/oder Cucurbit[8]uril verwendet werden, sind vorzugsweise ausgewählt aus der Gruppe bestehend aus Fluoreszenzfarbstoffen mit einem Molekulargewicht von 200 bis 1000 g/mol bezogen auf den Chromophor, Xanthen-Fluoreszenzfarbstoffen, Cyanin-Fluoreszenzfarbstoffen, Coumarin-Fluoreszenzfarbstoffen und Oxazin-Fluoreszenzfarbstoffen oder einer Mischung enthaltend zwei oder mehr dieser Farbstoffe. Besonders bevorzugt werden Cucurbiturile verwendet zum Verbessern der Photostabilität von Xanthen-, Coumarin-, Oxazin- und/oder Cyanin-Fluoreszenzfarbstoffen mit einem Molekulargewicht von 200 bis 1000 g/mol, wiederum bezogen auf den jeweiligen Chromophor.

Besonders bevorzugt ist die Verwendung eines Cucurbiturils zum Verbessern der Photostabilität eines Fluoreszenzfarbstoffs ausgewählt aus der Gruppe bestehend aus BiBuQ, BM-Terphenyl, Cumarin 2, Cumarin 6, Cumarin 7, Cumarin 30, Cumarin 47, Cumarin 102, Cumarin 120, Cumarin 153, Cumarin 307, Cumarin 334, Cumarin 6H, Cyanin 3, Cyanin 5, DCM, DMQ, DOTCI, DPS, HDITC, HITC, IR 125, IR 140, IR 144 + IR 125, Oxazin 1, Oxazin 9, Oxazin 750, PBBO, p-Terphenyl, Pyridin 1, Pyridin 2, QUI, Rhodamin 101, Rhodamin 110, Rhodamin 123, Rhodamin 6G, Rhodamin 700, Rhodamin 800, Rhodamin B, Tetramethylrhodamin, Stilben 3, Styryl 8, Styryl 9, Styryl 9M, Sulforhodamin B, Sulforhodamin G sowie deren Lakton-Formen, wobei es nicht auf den Protonierungs- und Deprotonierungsgrad des Fluoreszenzfarbstoffs ankommt.

Bevorzugt wird ein Cucurbituril zum Verbessern der Photostabilität der kationischen oder neutralen Form der genannten Fluoreszenzfarbstoffe eingesetzt. Anionische Fluoreszenzfarbstoffe besitzen nur eine geringe intrinsische Affinität zu Cucurbiturilen, so dass unter den für Bioassays üblichen Lösungsbedingungen häufig keine signifikante

Photostabilisierung durch Zugabe eines Cucurbiturils auftritt.

Insbesondere ist die Verwendung eines Cucurbiturils (insbesondere Cucurbit[5]uril, Cucurbit[6]uril, Cucurbit[7]uril und/oder Cucurbit[8]uril) zum Verbessern der Photostabilität eines Fluoreszenzfarbstoffs bevorzugt, wobei der Fluoreszenzfarbstoff zumindest einen Abschnitt umfasst, der ausgewählt ist aus der Gruppe bestehend aus: Amino-, Aminium, Ammonium-, Imino-, Iminium-, Imido-, Enamin-, Lactam- und Oxim-. Den durch Verwendung eines Cucurbiturils bevorzugt photostabilisierten Fluoreszenzfarbstoffen gemeinsam ist, dass sie ein bei pH 7 positiv geladenes und/oder ein in Lösung protonierbares N-Atom enthalten. Fluoreszenzfarbstoffe mit einem oder mehreren protonierbaren Stickstoffatomen gehen besonders leicht Komplexe mit Cucurbiturilen ein und werden daher durch Cucurbiturile besonders gut photostabitisiert.

Sehr gute Photostabilisierungen durch Verwendung eines Cucurbiturils konnten in bisherigen Versuchen erreicht werden für Rhodamin-Fluoreszenzfarbstoffe der allgemeinen Formel

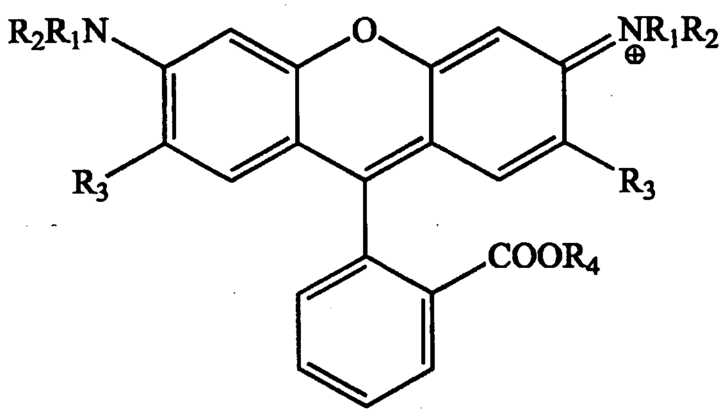

**Formel (F),**

wobei

- jeder der Reste $R_1$, $R_2$ unabhängig voneinander und von jedem anderen Rest ausgewählt sein kann aus H, $C_1$-$C_4$-alkyl, vorzugsweise $CH_3$ und besonders bevorzugt $C_2H_5$,
- jeder Rest $R_3$ unabhängig von jedem anderen Rest ausgewählt sein kann aus H und $C_1$-$C_4$-alkyl, vorzugsweise $CH_3$, und
- jeder Rest $R_4$ unabhängig von jedem anderen Rest ausgewählt sein kann aus H und $C_1$-$C_4$-alkyl, vorzugsweise $C_2H_5$,

sowie andere Salze, die Neutralform und die Lacton-Formen dieser Fluoreszenzfarbstoffe. Diese Verwendungen sind daher erfindungsgemäß bevorzugt.

Besonders gute Photostabilisierungen durch Verwendung eines Cucurbiturils wurden erreicht für die Fluoreszenzfarbstoffe gemäß Formel (F) Rhodamine 6G ($R_1$=H, $R_2$=$C_2H_5$, $R_3$=$CH_3$, $R_4$=$C_2H_5$), Rhodamine 123 ($R_1$=$R_2$=$R_3$=H, $R_4$=$C_2H_5$), und Tetramethylrhodamin ($R_1$=$R_2$=$CH_3$, $R_3$=$R_4$=H). Diese Verwendungen sind erfindungsgemäß besonders bevorzugt.

Die Photostabilität der Fluoreszenzfarbstoffe gemäß Formel (F) und insbesondere der soeben genannten Fluoreszenzfarbstoffe konnte erfindungsgemäß besonders gut verbessert werden durch die Verwendung von Cucurbit[7]uril.

Ebenfalls sehr gute Photostabilisierungen durch Verwendung eines Cucurbiturils, insbesondere von Cucurbit[7]uril wurden erreicht für Cyanin-Fluoreszenzfarbstoffe der allgemeinen Formel

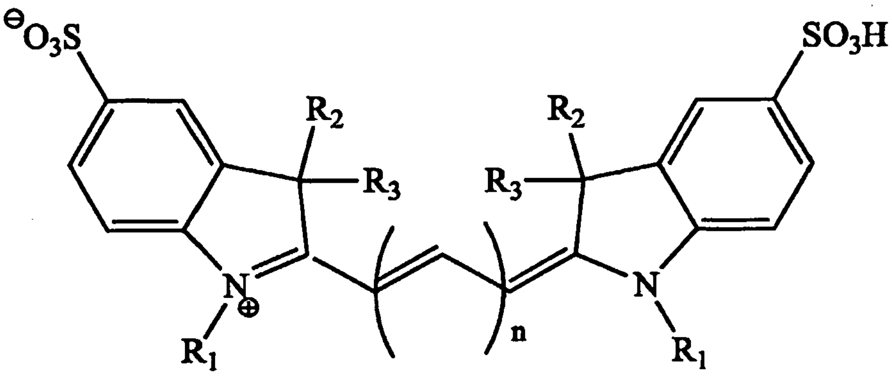

Formel (G),

wobei

- jeder Rest $R_1$, $R_2$, $R_3$ unabhängig von jedem anderen Rest $R_1$, $R_2$, $R_3$ ausgewählt ist aus H und $C_1$-$C_4$-alkyl, vorzugsweise $CH_3$ und $C_2H_5$, und wobei

- n eine ganze Zahl ist von 1 bis 5, vorzugsweise 1 oder 2.

sowie andere Salze und die Neutralform dieser Fluoreszenzfarbstoffe.

Besonders gute Photostabilisierungen wurden erreicht für die Cyanin-Fluoreszenzfarbstoffe Cyanine 3 ($R_1$=$C_2H_5$, $R_2$=$R_3$=$CH_3$, n=1) und Cyanine 5 ($R_1$=$C_2H_5$, $R_2$=$R_3$=$CH_3$, n=2), insbesondere bei Verwendung von Cucurbit [7]uril. Diese Verwendungen sind daher erfindungsgemäß ebenfalls besonders bevorzugt

Ebenfalls konnten sehr gute Verbesserungen der Photostabilität erreicht werden durch die Verwendung eines Cucurbiturils für Coumarin-Farbstoffe der allgemeinen Formel

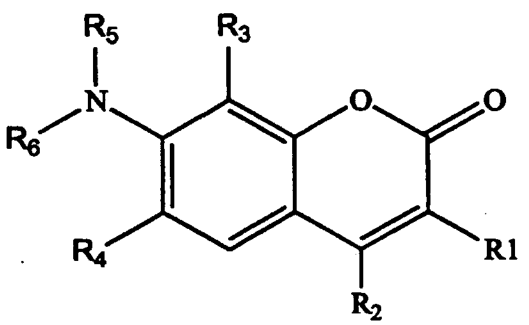

Formel (H),

wobei jeder der Reste $R_1$-$R_6$ unabhängig voneinander ausgewählt ist aus der Gruppe bestehend aus H, $C_1$-$C_4$-alkyl und vorzugsweise ausgewählt ist aus H und $CH_3$. Die Reste $R_4$ und $R_6$ und die Reste $R_3$ und $R_5$ können jeweils zusammen einen Ring bilden, der jeweils auch ein oder mehr Heteroatome und eine oder mehr Mehrfachbindungen enthalten kann. Ein Beispiel einer Untergruppe von Fluoreszenzfarbstoffen gemäß Formel (H) ist nachfolgend in Formel (I) wiedergegeben; das Photostabilisieren dieser Fluoreszenzfarbstoffe insbesondere durch Cucurbit[7]uril ist besonders bevorzugt. Besonders gute Photostabilisierungen wurden mit Cucurbit[7]uril erreicht für die Coumarin-Fluoreszenzfarbstoffe der Formel (I), insbesondere Coumarin 102 ($R_1$= H, $R_2$ = $CH_3$ in Formel (I)) und Coumarin 39 ($R_1$ = $CH_3$, $R_2$ = $CH_3$ in Formel (I)); diese Verwendungen sind daher ebenfalls erfindungsgemäß besonders bevorzugt.

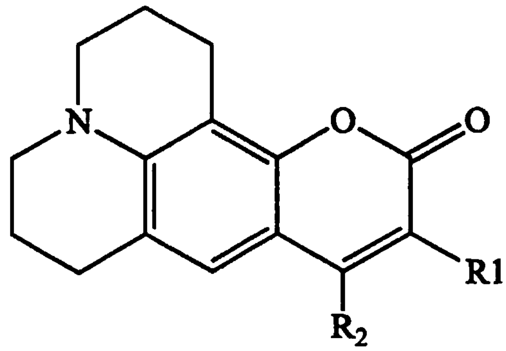

Formel (I),

Ferner wurde gefunden, dass Cucurbiturile die Löslichkeit eines Fluoreszenzfarbstoffs in wässrigen Medien verbessern können. Erfindungsgemäß ist deshalb auch die Verwendung eines Cucurbiturils zum Verbessern der Löslichkeit eines Fluoreszenzfarbstoffs bevorzugt.

Zusätzlich wurde gefunden, dass Fluoreszenzfarbstoffe in Cucurbituril-haltigen wässrigen Medien weniger stark an Oberflächen adsorbieren. Insbesondere adsorbiert ein mit einem Cucurbituril komplexierter Fluoreszenzfarbstoff in wässriger Lösung weniger stark an Glasoberflächen als ohne das Cucurbituril. Dementsprechend wird erfindungsgemäß gelehrt, ein Cucurbituril zum Verringern der Adsorption eines Fluoreszenzfarbstoffs an eine Oberfläche, insbesondere an eine Glasoberfläche, zu verwenden.

Die verbesserte Löslichkeit eines Fluoreszenzfarbstoffs in Verbindung mit einem Cucurbituril, die verringerte Adsorption an Oberflächen und die verbesserte Photostabilität führen insgesamt zu einer verbesserten Lagerungsstabilität des Fluoreszenzfarbstoffs, insbesondere in wässrigen Lösungen und insbesondere in Glasbehältern. Daher wird erfindungsgemäß auch gelehrt, ein Cucurbituril zum Verbessern der Lagerungsstabilität eines Fluoreszenzfarbstoffs zu verwenden.

In einem Komplex mit Cucurbituril ist die Absorbanz (Extinktionskoeffizient) und die Fluoreszenzquantenausbeute (Intensität) für mehrere Fluoreszenzfarbstoffe größer sein als ohne das Cucurbituril, z. B. für Coumarin-102 und für Cyanin 5. Die Verwendung eines Cucurbiturils zum Erhöhen der Absorbanz und/oder der Fluoreszenzquantenausbeute wird daher ebenfalls erfindungsgemäß gelehrt.

Darüber hinaus beeinflussen Cucurbiturile das Absorptionsmaximum von Fluoreszenzfarbstoffen; dabei hängt die Art der Verschiebung des Fluoreszenzspektrums von dem jeweiligen Fluoreszenzfarbstoff und dem jeweiligen Cucurbituril ab. Erfindungsgemäß wird daher auch die Verwendung eines Cucurbiturils zum Ändern des Fluoreszenzspektrums eines Fluoreszenzfarbstoffs angegeben.

Es versteht sich, dass für alle vorgenannten erfindungsgemäßen Verwendungen die Wechselwirkung des Cucurbiturils mit dem Fluoreszenzfarbstoff entscheidend ist. Dementsprechend sind für alle vorgenannten Verwendungen die eingangs genannten besonderen Kombinationen aus Cucurbituril und Fluoreszenzfarbstoff besonders bevorzugt. Insbesondere werden das Cucurbituril und der Fluoreszenzfarbstoff so ausgewählt, dass der Fluoreszenzfarbstoff vom Cucurbituril komplexiert werden kann. Vorzugsweise hat der Fluoreszenzfarbstoff in jeder der erfindungsgemäßen Verwendungen ein Molekulargewicht von 200 bis 1000 g/mol, wie eingangs beschrieben. In den erfindungsgemäßen Verwendungen besonders bevorzugte Fluoreszenzfarbstoffe sind ebenfalls eingangs näher beschrieben.

Darüber hinaus wird erfindungsgemäß ein photostabilisiertes Farbstoffprodukt angegeben, enthaltend einen Fluoreszenzfarbstoff und ein Cucurbituril in einer zur Photostabilisierung ausreichenden Konzentration. Das Cucurbituril ist dabei erfindungsgemäß in Abhängigkeit vom zu stabilisierenden Farbstoff wie oben beschrieben auszuwählen. Solche Farbstoffprodukte sind durch die Wirkung ihres Cucurbituril-Bestandteils besonders photostabil. Für die Auswahl eines besonders geeigneten Farbstoffs und besonders geeigneten Cucurbiturils gilt das oben gesagte.

Das Farbstoffprodukt enthält den oder die Fluoreszenzfarbstoffe und das oder die Cucurbiturile bevorzugt in einem wässrigen Medium, besonders bevorzugt in Wasser. In wässrigen Medien (insbesondere in Wasser) lassen sich Cucurbiturile besonders gut lösen, zudem werden wässrige Medien sehr häufig in üblichen Fluoreszenzassays eingesetzt.

Erfindungsgemäß sind solche Farbstoffprodukte und Verwendungen bevorzugt, bei denen die Konzentration des Fluoreszenzfarbstoffs zumindest 100 pM und die Konzentration des Cucurbiturils zumindest 1 $\mu$M beträgt Diese Mindestkonzentrationen sind besonders bevorzugt, wenn das Farbstoffprodukt den oder die Fluoreszenzfarbstoffe und das oder die Cucurbiturile in einem wässrigen Medium enthält, insbesondere in Wasser. Zudem sind solche Farbstoffprodukte und Verwendungen bevorzugt, bei denen die Konzentration des Fluoreszenzfarbstoffs nicht mehr als 100 $\mu$M und die Konzentration des Cucurbiturils nicht mehr als 10 mM beträgt.

Das erfindungsgemäße Farbstoffprodukt ist in besonders bevorzugten Ausführungsformen eine Laserfarbstofflösung für einen Farbstofflaser oder eine Referenzlösung für mikroskopische und spektroskopische Zwecke. So enthalten beispielsweise kommerzielle UV-Spektrophotometer Referenzlösungen von Rhodamin oder werden standardmäßig mit Hilfe von Rhodamin-Lösungen spektral korrigiert. Weitere Anwendungsmöglichkeiten liegen im Bereich der konfokalen Fluoreszenzmikroskopie, wo aufgrund der hohen Laserlichtintensitäten die Photostabilität von Fluoreszenzfarbstoffen von besonderer Bedeutung ist. Mithilfe der konfokalen Mikroskopie werden insbesondere mit Fluoreszenzfarbstoffen markierte biologische oder biologisch relevante Proben untersucht, so dass die Zugabe eines Photostabilisators wie beispielsweise erfindungsgemäß die Zugabe eines Cucurbiturils die Zeit verlängert, während der die markierten biologischen Proben untersucht werden können. Dies ermöglicht genauere, höher aufgelöste Messungen, und Messungen über längere Zeiten zur Verfolgung von zeitabhängigen Prozessen.

Fluoreszenzverfahren werden breit im Bereich der Wirkstoffforschung, im High-Throughput-Screening und in Assays eingesetzt, wo eine erhöhte Photostabilität ebenfalls vorteilhaft ist, insbesondere bei im High-Throughput-Screening mittels konfokaler Fluoreszenzmikroskopie, wo zur Verringerung der Probenmengen wiederum fokussiertes Laserlicht eingesetzt wird. Auch erfordern zahlreiche Anwendungen in der konfokalen Mikroskopie Referenzlösungen zur Kalibrierung und Optimierung, bei denen eine hohe Photostabilität einer Standardlösung eines Fluoreszenzfarbstoffs wünschenswert ist. Dementsprechend wird erfindungsgemäß auch ein Farbstofflaser und ein Spektrometer angegeben, enthaltend eine Laserfarbstofflösung bzw. eine Fluoreszenzfarbstofflösung der zuvor beschriebenen erfindungsgemäßen Art. Solche Farbstofflaser und Spektrometer haben gegenüber herkömmlichen Farbstofflasern und Spektrometern den Vorteil einer verbesserten Photostabilität der Fluoreszenzfarbstofflösung, so dass die Fluoreszenzfarbstofflösung bei gleicher Laserleistung seltener ausgetauscht werden muss, und stabilere, reproduzierbare Ergebnisse liefern kann.

Ebenfalls bevorzugte erfindungsgemäße Farbstoffprodukte sind solche der Informationstechnologie, insbesondere ein Speichermedium und ein Anzeigemedium, jeweils enthaltend einen Fluoreszenzfarbstoff und ein Cucurbituril zum Verbessern der Photostabilität des Fluoreszenzfarbstoffs. Durch die Verwendung eines Cucurbiturils wird es vorteilhaft ermöglicht, Fluoreszenzfarbstoffe optisch anzuregen und ihre Fluoreszenz wiederholt zu bestimmen. Cucurbiturile sind daher in der Lage, einem Fluoreszenzfarbstoffe enthaltenden optischen Speichermedium die notwendige wiederholte Lesbarkeit und die notwendige Lebensdauer zu verleihen. Zudem wird bei Wahl des entsprechenden Farbstoffs durch die Verwendung eines Cucurbiturils die Absorbanz (der Extinktionskoeffizient) und die Fluoreszenzquantenausbeute (Intensität) erhöht, so dass ein erfindungsgemäßes Speichermedium und ein erfindungsgemäßes Anzeigemedium weniger intensiv bestrahlt werden muss, um ein starkes Lumineszenzsignal zu erzeugen. Dies führt ebenfalls zu einer gegenüber herkömmlichen Speichermedien und Anzeigemedien verlängerten Lebensdauer. Auf Fluoreszenz anstelle von optischer Reflektion basierende Speichermedien sollten sich prinzipiell durch eine höhere erreichbare Datendichte, durch die Möglichkeit dreidimensionaler Datenspeicherung und selektiver Adressierung auszeichnen, und derartige Datenträger werden in Fachkreisen als eine Technologie einer nächsten Generation bzw. Technologie des 21. Jahrhunderts bezeichnet
(http://www.vxm.com/Speed.MassStorage.html;
http://www.ifrance.com/shumanldata_storage_technology.htm;
http://pubs.acs.org/cen/topstory/8047/8047notw7.html).

Es wird entsprechend erfindungsgemäß ein optisches Speichermedium zum Speichern von Daten angegeben, wobei das Speichermedium umfasst:

a) einen festen Träger, und

b) eine Speicherschicht zum Aufzeichnen und Wiedergeben von Informationen, wobei die Speicherschicht Speicherabschnitte umfasst, und wobei die Speicherabschnitte einen Fluoreszenzfarbstoff und ein Cucurbituril in einer zur Photostabilisierung des Fluoreszenzfarbstoffs ausreichenden Konzentration enthält.

Das Speichermedium verwirklicht die mit der Verwendung von Cucurbiturilen erzielbaren Vorteile. Insbesondere ist es mit Hilfe von Cucurbiturilen möglich, ein mehrfach durch Einstrahlenlassen von Licht auslesbares Speichermedium mit Fluoreszenzfarbstoffen bereitzustellen. Das erfindungsgemäße Speichermedium kann mehrere Speicherschichten umfassen, um die Menge der auf dem Speichermedium speicherbaren Informationen zu vergrößern.

Zum Beschreiben eines erfindungsgemäßen optischen Speichermediums wird erfindungsgemäß ein Verfahren angegeben, das die Schritte umfasst:

a) Einlesen einer zu speichernden Information, und

b) Zerstören von Fluoreszenzfarbstoff und/oder von Cucurbituril an entsprechend der zu speichernden Information ausgewählten Speicherabschnitten, um eine Anordnung von Speicherabschnitten mit der zu speichernden Information entsprechender Fähigkeit zum Aussenden eines Fluoreszenzsignals zu erzeugen.

Im Ergebnis wird auf dem Speichermedium ein Muster von Speicherabschnitten erzeugt, wobei die Speicherabschnitte je nach auf das Speichermedium geschriebener Information fluoreszieren. Wird das Cucurbituril an den Speicherabschnitten zerstört und somit seine Fähigkeit eingeschränkt oder beseitigt, den Fluoreszenzfarbstoff des jeweiligen Speicherabschnitts zu photostabilisieren, so wird ein Muster von Speicherabschnitten erzeugt, bei dem die Speicherabschnitte je nach auf das Speichermedium geschriebener Information unterschiedlich dauerhaft fluoreszieren. Umfasst das Speichermedium mehrere Schichten von Speicherabschnitten, so umfasst das erfindungsgemäße Verfahren zweckmäßigerweise den Schritt, zum Schreiben einer Information eine zugehörige Schicht auszuwählen.

Zur Durchführung des erfindungsgemäßen Verfahrens wird eine SpeicherVorrichtung angegeben, umfassend

a) eine Speicherfläche mit Speicherabschnitten, wobei die Speicherabschnitte einen Fluoreszenzfarbstoff und ein Cucurbituril insbesondere in einer zur Photostabilisierung des Fluoreszenzfarbstoffes ausreichenden Konzentration enthalten, und

b) Bestrahlungsmittel zum Bestrahlen eines ausgewählten Speicherabschnitts mit einer zum Auslösen eines Fluoreszenzsignals ausreichenden Strahlungsintensität.

Auch die erfindungsgemäße Speichervorrichtung verwirklicht die oben beschriebenen, mit der Verwendung von Cucurbiturilen erzielbaren Vorteile.

Zweckmäßigerweise enthält die Speichervorrichtung Regelmittel für die Bestrahlungsmittel, um diesen einen ausgewählten Speicherabschnitt entsprechend einer zu speichernden Information anzugeben.

Zudem wird erfindungsgemäß eine Anzeigevorrichtung angegeben, umfassend

a) eine Anzeigefläche mit Anzeigeabschnitten, wobei die Anzeigeabschnitte einen Fluoreszenzfarbstoff und ein Cucurbituril in einer zur Photostabilisierung des Fluoreszenzfarbstoffs ausreichenden Konzentration enthalten,

b) Bestrahlungsmittel zum Bestrahlen eines ausgewählten Anzeigeabschnitts mit einer zum Auslösen eines Fluoreszenzsignals ausreichenden Strahlungsintensität, und

c) eine mit dem Bestrahlungsmittel in Wirkverbindung stehende Regelvorrichtung, um das Bestrahlungsmittel so zu regeln, dass entsprechend einer von der Regelvorrichtung eingelesenen Bildinformation Anzeigeabschnitte bestrahlt oder nicht bestrahlt werden, um auf der Anzeigefläche ein der Bildinformation entsprechendes Fluoreszenzbild hervorzubringen.

Die erfindungsgemäße Anzeigevorrichtung verwirklicht die oben beschriebenen, mit der Verwendung von Cucurbiturilen erzielbaren Vorteile.

Die erfindungsgemäße Anzeigevorrichtung und die erfindungsgemäße Speichervorrichtung können in jedem Anzeigeabschnitt bzw. Speicherabschnitt insbesondere ein erfindungsgemäßes Farbstoffprodukt enthalten, so dass der oder die Fluoreszenzfarbstoffe in einem Anzeige- und/oder Speicherabschnitt photostabilisiert sind.

In Abhängigkeit von der Anwendung, und insbesondere bei Anwendungen in Speicher und Anzeigemedien, als auch in High-Throughput-Screening-Verfahren, kann der Einsatz fester, d.h. nicht gelöster jedoch photostabilisierter Fluoreszenzfarbstoffe, erforderlich oder vorteilhaft sein. Erfindungsgemäß umfasst die beschriebene Photostabilisierung durch Cucurbituril auch als Feststoff isolierte (z.B. durch Entfernung des Lösungsmittels) Fluoreszenzfarbstoffkomplexe mit Cucurbituril, als auch Komplexe auf Oberflächen mittels oberflächenfixierter oder materialgebundener Fluoreszenzfarbstoffe oder Cucurbiturile.

Die Erfindung wird nachfolgend anhand einiger Ausführungsbeispiele und der Figuren näher beschrieben:

<u>Beispiel 1:</u> Verbesserung der Photostabilität von Rhodamin 6G

Das Zugeben von Cucurbituril (Gemisch mehrerer Cucurbiturile, wobei Cucurbit[7]uril (Formel (D), auch bezeichnet als CB7) die vorherrschende Spezies war gemäss Massenspektrometrie, mit Cucurbit[5]uril als zuweisbare Verunreinigung), Konzentration an Cucurbit[7]uril 1-2 mM, Gemisch hergestellt wie beschrieben in C. Marquez, F. Huang, W.M. Nau, "Cucurbiturils: Molecular Nanocapsules for Time-Resolved Fluorescence-based Analysis", IEEE Trans. Nanobiosci. 2004, 3, 39-45) zu einer wässrigen Lösung von Rhodamin 6G (1-10 μM) in einer Quartzküvette (1 cm x 4 cm) erhöhte die Photostabilität der Probe sowohl gegenüber Laserbestrahlung mit der 2. Harmonischen (532 nm) eines Nd-YAG-Lasers (Continuum Surelite III 10 model, 1.3-2.1 kW/$cm^2$) als auch gegenüber Tageslicht (Umgebungslicht). Die Photostabilisierung des durch Cucurbituril (CB7) stabilisierten Fluoreszenzfarbstoffs wurde verfolgt durch die charakteristische sichtbare Absorptionsbande mit einem Varian Cary 50 UV-VIS-Spektrophotometer bezogen auf eine Cucurbituril-freie, optisch angepasste (bei 532 nm) Lösung des Fluoreszenzfarbstoffs. Die UV-Vis-Spektren wurden zu verschiedenen Bestrahlungszeitpunkten aufgenommen (Fig. 1) und die abnehmende Absorption (A) bei 532 nm aufgetragen gegen die pertinente Funktion log([$10^{A_0}$-1]/[$10^A$-1]). Fig. 1 zeigt Absorptionspektren von Rhodamin-6G ohne (rot, Spektren mit Maxima links) und mit (blau, Spektren mit Maxima rechts) Cucurbit[7]uril bei verschiedenen, jeweils vergleichbaren 532-nm Laserbestrahlungszeiten (0 min, 3 min, 20 min, 37 min und 60 min). Erkennbar ist die langsamere Abnahme der charakteristischen Absorption mit Cucurbit[7]uril und die Verschiebung der Absorptionswellenlänge. Die Konzentrationen mit und ohne Cucurbit[7]uril sind nicht identisch, sondern wurden so gewählt, dass die Absorbanz bei 532 nm bei Bestrahlungsbeginn identisch war. Die Konzentration des Rhodamins 6G war in Proben enthaltend Cucuribit [7]uril aufgrund eines höheren Extinktionskoeffizienten geringer als in Proben ohne Cucurbit[7]uril.

Die Quantenausbeute des Photobleichens wurde bestimmt anhand des anfänglichen linearen Bereichs des Graphen (Fig. 2) aus dem Verhältnis der Steigungen S(D)/S(D+CB7) = $\varepsilon_D\phi_b$(D)/[$\varepsilon_{D+CB7}\phi_b$(D+CB7)], wobei $\varepsilon_{D+CB7}$ und $\varepsilon_D$ der Extinktionskoeffizient des Farbstoffs ("dye", D) mit bzw. ohne CB7 bei der Bestrahlungswellenlänge von 532 nm ist.

Fig. 2 zeigt eine Auftragung der Daten gemäss Fig. 1 für die Absorptionspektren von Rhodamin-6G ohne (rot, Datenpunkte oben) und mit (blau, Datenpunkte unten) Cucurbit[7]uril gemäss log([$10^{A_0}$-1]/[$10^A$-1]) gegen die Bestrahlungsdauer zur Ermittlung des zeitabhängigen Stabilisierungsfaktors aus der Steigung. Als Stabilisierungsfaktor wurde das Verhältnis der Quantenausbeuten des Photobleichens in Abwesenheit und Anwesenheit von CB7 gewählt. Dies führte zu den in Tabelle 1 angegebenen Ergebnissen.

Es wurde beispielsweise gefunden, dass die Zahl der Absorptionszyklen, bevor ein Molekül Rhodamin 6G zerfällt, durch Zugabe von Cucurbit[7]uril (in Form der oben beschriebenen CB7-Lösung) von 0,8 Mio. auf 22 Mio. gesteigert wird. Zum Vergleich dazu beträgt die Zahl der entsprechenden Absorptionszyklen für Rhodamin 123, einem der stabilsten Fluoreszenzfarbstoffe, lediglich 1,6 Mio. Durch Verwendung von Cucurbit[7]uril wird daher die Photostabilität von Rhodamin 6G erheblich verbessert.

Alternativ dazu wurde die Abnahme der Fluoreszenzintensität der oben beschriebenen Lösungen durch Beobachten ihrer Fluoreszenz (Cary Edipse Fluorometer, Varian) bestimmt, wenn die Lösungen bei Tageslicht (Umgebungslicht) gelagert wurden. Die Fluoreszenzintensität blieb für die Cucurbituril enthaltende Lösung im Beobachtungszeitraum unverändert, während sie für die Cucurbituril-freie Lösung deutlich abnahm (Fig. 3), und zwar mit angenäherten Halbwertszeiten von ca. 80 - 390 Stunden, je nach Probenbehältnis. Fig. 3 zeigt die Abnahme der Fluoreszenzintensität von Rhodamin-6G bei Tageslicht unter verschiedenen Bedingungen: a) mit Cucurbit[7]uril in Glasprobenflaschen (Rh6G-CB7), b) ohne Cucurbit[7]uril in Quartz-Küvetten (quartz cuvette, Rh6G) und c) ohne Cucurbit[7]uril in Glasprobenflaschen (glass bottle, Rh6G). Es ist zu erkennen, dass durch Verwendung von Cucurbit[7]urii die Fluoreszenzintensität von Rhodamin-6G bei 300 stündigem Aussetzen von Tageslicht praktisch nicht abnimmt, während die Fluoreszenzintensität in Quartz-Küvetten in der gleichen Zeit auf 90% des ursprünglichen Wertes und in einer Glasprobenflasche auf 60% des ursprünglichen Wertes abnimmt.

Probleme aufgrund einer erheblichen Abnahme der Fluoreszenzintensität der Farbstofflösung in Cucurbituril freien, unstabilisierten Lösungen sind dem Fachmann bekannt (Eggeling et al, Photostability of Fluorescent Dyes for Single-Molecule Spectroscopy: Mechanisms and Experimental Methods for Estimating Photobleaching in Aqueous Solution, Kapitel 10 in Rettig et al., Applied Fluorescence in Chemistry, Biology and Medicine, Springer Verlag, ISBN 3-540-64451-2). Der Effekt tritt besonders deutlich auf, wenn die Lösungen in gewöhnlichen Glas-Probenflaschen statt in Quartzküvetten verfolgt werden, siehe Fig. 3.

<u>Tabelle 1:</u> Quantenausbeuten des Photobleichens und Stabilisierungsfaktoren für Rhodamin 6G in Anwesenheit von Cucurbituril (CB7)*

| Bedingungen | Stabilisierungsfaktor |
|---|---|
| ohne CB7 | ≡ 1 (Referenz) |
| mit 1 mM CB7, Tageslicht, Schraubverschluss-Glasprobenflasche | > 5000* |
| mit 1 mM CB7, Tageslicht, Quartzküvette | > 500* |
| mit 1 mM CB7, niedrige Laserleistung (1,3 W) | 30* |
| mit 1 mM CB7, hohe Laserleistung (2,1 W) | 7,5* |
| *Unabhängig von der Konzentration an CB7 (ca. 1 und 2 mM) und Laserfarbstoff (ca. 3.5 und 7 μM) und Laserfrequenz (1 Hz oder 10 Hz) | |

<u>Beispiel 2:</u> Untersuchungen an weiteren Fluoreszenzfarbstoffen

Wässrige Lösungen von Fluoreszenzfarbstoffen (10 nM) mit und ohne Cucurbit[7]uril (1 mM) wurden auch

durch Fluoreszenzkorrelationsspektroskopie (FCS) auf einem konfokalen Mikroskop (Carl Zeiss LSM 510 Confocor 2) untersucht, welches für mehrere für die Biologie, Biochemie und Spektroskopie relevante Anwendungen Verwendung findet. 400 μl jeder Lösung wurden in ein 8-kammriges Deckglassystem überführt und mit dem Licht eines CW-Lasers bestrahlt. Die Abnahme der Zählrate, die direkt proportional zur mittleren Fluoreszenzintensität der Probe ist, wurde gegen die Bestrahlungszeit gemessen. Fig. 4 zeigt die Abnahme der Zählrate für eine Tetramethylrhodamin (TMR)-Lösung mit und ohne Cucurbituril (CB7). Erkennbar ist wiederum eine erhebliche Photostabilisierung, da nach ca. 30 min ohne Cucurbit[7]uril weniger als 30 %, mit Cucurbit[7]uril jedoch noch mehr als 90% der Zählrate vorhanden sind. Die beobachteten Photostabilisierungsfaktoren sind in Tabelle 2 enthalten (Fussnoten b, c, d).

Tabelle 2: Einfluss der Zugabe von CB7 (1 mM) auf die Helligkeit ("brightness") ($\varepsilon \times \phi_f$) und die Photostabilität ausgewählter Fluoreszenzfarbstoffe

| Fluoreszenzfarbstoff | ohne CB7 | | Mit 1 mM CB7 | | Stabilisierungsfaktor |
|---|---|---|---|---|---|
| | $\phi_f$ | $\varepsilon \times \phi_f$ | $\phi_f$ | $\varepsilon \times \phi_f$ | |
| Rhodamin 6G | 0.89 | 71218 | 0.883 | 81594 | 30.0[a]<br>5.4[b] |
| Rhodamin 123 | 0.83 | 57470 | 0.362 | 24097 | 1.8[c] |
| Tetramethylrhodamin | 0.20 | 17553 | 0.271 | 20277 | 4.3[b] |
| Coumarin-102 | 0.66 | 14388 | 0.754 | 17807 | - |
| Cyanin 3 | 0.15 | 18000 | 0.108 | 11502 | 1.4[a] |
| Cyanin 5 | 0.27 | 37260 | 0.456 | 51000 | 1.3[d] |

[a] Bei Bestrahlung 3 μM Farbstofflösungen mit 532-nm Laserlicht (1.3 W, 10 Hz) eines Nd-YAG Lasers.
[b] Bei Bestrahlung 10 nM Farbstofflösungen mit 514-nm Laserlicht (30 mW, cw) eines Ar/2 Lasers in der Fluoreszenzkorrelationsspektroskopie (FCS, Carl Zeiss LSM 510 Confocor 2) nach 35 min, quantifiziert über Photonenzählrate.
[c] Bei Bestrahlung 10 nM Farbstofflösungen mit 514-nm Laserlicht (30 mW, cw) eines Ar/2 Lasers in der Ftuoreszenzkorrelationsspektroskopie (FCS, Carl Zeiss LSM 510 Confocor 2) nach 5 min.
[d] Bei Bestrahlung 10 nM Farbstofflösungen mit 633-nm Laserlicht (6 mW, cw) eines He-Ne/2 Lasers in der Fluoreszenzkorrelationsspektroskopie (FCS, Carl Zeiss LSM 510 Confocor 2) nach 35 min,

Fig. 4 zeigt die Abnahme der relativen Photonenzählrate ("count rate") von TMR-Lösungen im konfokalen Fluoreszenzmikroskop (Modus Fluoreszenzkorrelationsspektroskopie) mit (TMR-CB7) und ohne (TMR) Stabilisierung durch Cucurbit[7]uril. Die Photonenzählrate in Proben enthaltend Cucurbit[7]uril verringerte sich während einer 2000 s dauernden Bestrahlung lediglich auf etwa 95 %, während sich die Photonenzählrate der Cucurbit[7]uril-freien Probe in der gleichen Zeit auf etwa 25 % des ursprünglichen Wertes verringerte.

Beispiel 3: Einfluss auf photophysikalische Eigenschaften

Zugabe von Cucurbiturilen führt zur Bildung von Komplexen mit Fluoreszenzfarbstoffen, die veränderte photophysikalische Eigenschaften aufweisen, siehe Beispiele in Tabelle 3.

Tabelle 3: Einfluss der Zugabe von CB7 (1 mM) auf die Absorptions- und Fluoreszenzmaxima ausgewählter Fluoreszenzfarbstoffe

| Fluoreszenzfarbstoff | ohne CB7 | | mit 1 mM CB7 | |
|---|---|---|---|---|
| | $\lambda_{abs}^{max}$ | $\lambda_{em}^{max}$ | $\lambda_{abs}^{max}$ | $\lambda_{em}^{max}$ |
| Rhodamin 6G | 526.0 | 552.0 | 534.6 | 555.0 |
| Rhodamin 123 | 500.0 | 525.0 | 502.6 | 532.0 |
| Tetramethylrhodamin | 552.6 | 577.0 | 558.6 | 582.0 |
| Coumarin-102 | 392.6 | 489.0 | 404.6 | 476.0 |
| Cyanin 3 | 544.6 | 560.0 | 558.6 | 571.0 |

(fortgesetzt)

| Fluoreszenzfarbstoff | ohne CB7 | | mit 1 mM CB7 | |
|---|---|---|---|---|
| | $\lambda_{abs}^{max}$ | $\lambda_{em}^{max}$ | $\lambda_{abs}^{max}$ | $\lambda_{em}^{max}$ |
| Cyanin 5 | 642.0 | 660.0 | 642.2 | 657.0 |

Beispiel 4: Optisches Speichermedium

Fig. 5 zeigt ein erfindungsgemäßes optisches Speichermedium 100. Das optische Speichermedium 100 besitzt einen festen Träger 101, eine Deckschicht 105 sowie zwischen dem Träger 101 und der Deckschicht 105 zwei Speicherschichten 110, 120 zum Aufzeichnen von Informationen. Die Speicherschichten 110, 120 sind durch eine Trennschicht 103 voneinander beabstandet.

Die Speicherschichten 110 und 120 umfassen jeweils Speicherabschnitte 111 bzw. 121. Die Speicherabschnitte 111, 121 enthalten jeweils einen Fluoreszenzfarbstoff sowie Cucurbituril, wenn der jeweilige Speicherabschnitt 111, 121 entsprechend der auf dem Speichermedium 100 gespeicherten Information dauerhaft fluoreszierend sein soll. Die Speicherabschnitte 111, 121 der Speicherschichten 110, 120 können in der Ebene der jeweiligen Speicherschicht 110, 120 durch Abschnitte voneinander beabstandet sein, die keine Speicherabschnitte 111, 121 sind. Dadurch wird die Sicherheit beim Schreiben und Lesen von Informationen auf bzw. vom optischen Speichermedium verbessert.

Die Trennschicht 105 und die Deckschicht 105 sind für Strahlung der Anregungs- und Fluoreszenzwellenlänge des jeweiligen Fluoreszenzfarbstoffs im wesentlichen durchlässig.

Zum Speichern (Schreiben) einer Information wird zunächst ein entsprechender Speicherabschnitt 111, 121 ausgewählt. In diesem Speicherabschnitt wird der Fluoreszenzfarbstoff und/oder das Cucurbituril je nach zu speichernder Information und Kodierungsschema vollständig, teilweise oder nicht zerstört. Insbesondere kann der Fluoreszenzfarbstoff durch Bestrahlen mit sehr starkem Licht der jeweiligen Anregungswellenlänge zerstört werden. Es entsteht somit auf dem Speichermedium 100 ein Muster aus Speicherabschnitten 111, 121, deren Fluoreszenzintensität je nach gespeicherter Information unterschiedlich dauerhaft bzw. unterschiedlich stark ist.

Zum Lesen der Information wird ein Speicherabschnitt 111, 121 mit Licht der Anregungswellenlänge des jeweils am Speicherabschnitt 111, 121 erwarteten Fluoreszenzfarbstoffs bestrahlt. Je nachdem, ob am Speicherabschnitt der Fluoreszenzfarbstoff vorliegt, und gegebenenfalls ob der Fluoreszenzfarbstoff durch Cucurbituril photostabilisiert wird, wird durch die Bestrahlung ein der gespeicherten Information entsprechendes Fluoreszenzsignal erzeugt. Das Fluoreszenzsignal wird gemessen und die gespeicherte Information anhand des Fluoreszenzsignals rekonstruiert.

Der Fachmann versteht, dass das Speichermedium nicht lediglich zwei Speicherschichten 110, 120, sondern auch beispielsweise lediglich eine Speicherschicht 110 bzw. 120 oder drei oder mehr Speicherschichten besitzen kann. Zudem können die ein, zwei, drei oder mehr Speicherschichten mehr als einen Fluoreszenzfarbstoff enthalten, wobei es besonders bevorzugt ist, wenn jede Speicherschicht einen Fluoreszenzfarbstoff enthält, dessen Anregungs- und Emissionswellenlänge verschieden ist von den Anregungs- und Emissionswellenlängen von Fluoreszenzfärbstoffen anderer Speicherschichten. Auf diese Weise wird das Auswählen der zu beschreibenden und der zu lesenden Speicherschicht vorteilhaft vereinfacht.

## Patentansprüche

1. Verwendung eines Cucurbiturils zum Verbessern der Photostabilität und/oder zum Verbessern der Lagerbarkeit eines Fluoreszenzfarbstoffs.

2. Verwendung nach Anspruch 1, wobei das Cucurbituril ausgewählt ist aus der Gruppe bestehend aus Cucurbit[5]uril, Cucurbit[6]uril, Cucurbit[7]uril und Cucurbit[8]uril oder einer Mischung zweier oder mehrerer dieser Cucurbiturile.

3. Verwendung nach einem der Ansprüche 1 oder 2, wobei der Fluoreszenzfarbstoff ausgewählt ist aus der Gruppe bestehend aus Fluoreszenzfarbstoffen mit einem Molekulargewicht von 200 bis 1000 g/mol, Xanthen-Fluoreszenzfarbstoffen, Cyanin-Fluoreszenzfarbstoffen, Oxazin-Fluoreszenzfarbstoffen und Coumarin-Fluoreszenzfarbstoffen oder einer Mischung enthaltend zwei oder mehr dieser Farbstoffe.

4. Photostabilisiertes Farbstoffprodukt, enthaltend einen Fluoreszenzfarbstoff und ein Cucurbituril in einer zur Photostabilisierung des Fluoreszenzfarbstoffs ausreichenden Konzentration.

**5.** Farbstoffprodukt nach Anspruch 4, wobei die Konzentration des Fluoreszenzfarbstoffs zumindest 100 pM und die Konzentration des Cucurbiturils zumindest 1 µM beträgt.

**6.** Farbstoffprodukt nach einem der Ansprüche 4 oder 5, wobei das Farbstoffprodukt ausgewählt ist aus der Gruppe bestehend aus: einer Laserfarbstofflösung für einen Farbstofflaser, eine Referenzlösung für spektroskopische Zwekke, ein optisches Speichermedium und/oder ein Anzeigemedium.

**7.** Farbstofflaser enthaltend ein Farbstoffprodukt nach Anspruch 6.

**8.** Optisches Speichermedium zum Speichern von Daten nach Anspruch 6, umfassend

a) einen festen Träger, und
b) eine Speicherschicht zum Aufzeichnen und Wiedergeben von Informationen, wobei die Speicherschicht Speicherabschnitte umfasst, und wobei die Speicherabschnitte einen Fluoreszenzfarbstoff und ein Cucurbituril in einer zur Photostabilisierung des Fluoreszenzfarbstoffs ausreichenden Konzentration enthält.

**9.** Anzeigevorrichtung nach Anspruch 6, umfassend

a) eine Anzeigefläche mit Anzeigeabschnitten, wobei die Anzeigeabschnitte einen Fluoreszenzfarbstoff und ein Cucurbituril in einer zur Photostabilisierung des Fluoreszenzfarbstoffs ausreichenden Konzentration enthalten,
b) Bestrahlungsmittel zum Bestrahlen eines ausgewählten Anzeigeabschnitts mit einer zum Auslösen eines Fluoreszenzsignals ausreichenden Strahlungsintensität, und
c) eine mit dem Bestrahlungsmittel in Wirkverbindung stehende Regelvorrichtung, um das Bestrahlungsmittel so zu regeln, dass entsprechend einer von der Regelvorrichtung eingelesenen Bildinformation Anzeigeabschnitte bestrahlt oder nicht bestrahlt werden, um auf der Anzeigefläche ein der Bildinformation entsprechendes Fluoreszenzbild hervorzubringen.

**10.** Speichervorrichtung, umfassend

a) eine Speicherfläche mit Speicherabschnitten, wobei die Speicherabschnitte einen Fluoreszenzfarbstoff und ein Cucurbituril enthalten, und
b) Bestrahlungsmittel zum Bestrahlen eines ausgewählten Speicherabschnitts mit einer zum Auslösen eines Fluoreszenzsignals ausreichenden Strahlungsintensität.

**11.** Verfahren zum Beschreiben eines optischen Speichermediums nach einem der Ansprüche 6 und/oder 8, umfassend die Schritte:

a) Einlesen einer zu speichernden Information, und
b) Zerstören von Fluoreszenzfarbstoff und/oder von Cucurbituril an entsprechend der zu speichernden Information ausgewählten Speicherabschnitten, um eine Anordnung von Speicherabschnitten mit der zu speichernden Information entsprechender Fähigkeit zum Aussenden eines Fluoreszenzsignals zu erzeugen.

## Claims

**1.** Application of Cucurbiturils to enhance the photostability and/or to enhance the shelf-life of fluorescent dyes.

**2.** Application according Claim 1 whereby the Cucurbituril is selected out of the following list: Cucurbit[5]uril, Cucurbit[6]uril, Cucurbit[7]uril, and Cucurbit[8]uril or a mixture of two or more of these Cucurbitrils.

**3.** Application according to either Claim 1 or Claim 2, whereby the fluorescent dye is a chosen out of the following list of fluorescent dyes with a molecular weight between 200 and 1000 g/mol: Xanthene-flourescent dyes, Cyanine-fluorescent dyes, Oxazin-flourescent dyes and Coumarin-fluorescent dyes, or a mixture containing two or more of these dyes.

**4.** Photostabilized dye contains a fluorescent dye and a Cucurbturil in the appropriate concentrations for photostabilizing the fluorescent dye.

5. Photostabilized dye according Claim 4, whereby the concentration of the fluorescent dye is at least 100 pM and the concentration of Cucurbiturils is at least 1 μM.

6. Photostabilized dye of either Claim 4 or Claim 5, whereby the photostabilized dye is chosen out of one of the list consisting: a laser-dye solution for dye-lasers, a reference solution for spectroscopy applications, an optical storage device and/or a display devices.

7. Dye-lasers containing a Photostabilized dye according Claim 6

8. Optical storage device for storage data according Claim 6, comprising

a. a solid support, and
b. a memory-layer for recording and retrieval of information, whereby the memory-layer comprises memory-sections and whereby the memory-sections contains a fluorescent dye and a Cucurbituril, with an appropriate concentrations for photostabilizing the fluorescent dye.

9. Display device according Claim 6, comprising

a. a display surface with display components, whereby the display components contain a fluorescent dye and a Cucurbituril, with the appropriate concentrations for photostabilizing the fluorescent dye.
b. irradiation means for irradiation of a selected display component with an adequate irradiation intensity to trigger a fluorescent signal, and
c. irradiation means with an impact relation to a regulation device for controlling an irradiation device so that the irradiation device is regulated in such a way that according to the image information read by the regulation device the display components are either irradiated or not, thereby producing a fluorescence image on the display device matching the original image.

10. Memory device comprising

a. a memory-surface with memory sections, where the memory sections contain a fluorescent dye and cucurbituril, and
b. an irradiation means for irradiation of a selected memory section with an adequate irradiation intensity to trigger a fluorescent signal

11. A method for writing to an optical memory device according Claim 6 and/or Claim 8, comprising the following steps:

a. reading the information to be saved, and
b. destroying of fluorescent dye and/or Cucurbituril at selected memory sections corresponding to the information to be saved, for allowing the generation of an assembly of memory units with the ability to produce a fluorescent signal that represents the to be stored information.

**Revendications**

1. L'application des Cucurbiturils pour augmenter la photostabilité et/ou pour augmenter la durée de conservation des colorants fluorescents.

2. L'application de la Revendication 1 par laquelle Cucurbituril soit l'un des suivantes: Cucurbit[5]uril, Cucurbit[6]uril, Cucurbit[7]uril, Cucurbit[8]uril ou un mélange de deux ou plus de ces Cucurbiturils.

3. L'application selon la Revendication 1 ou la Revendication 2, par laquelle le fluorescent colorant soit choisi des familles suivantes des colorants fluorescents familles avec un poids moléculaire entre 200 et 1000 g/mol : Xanthene-colorants fluorescents, Cyanine-colorants fluorescents, Oxazin-colorants fluorescents, et Coumarine-colorants fluorescents, ou un mélange de deux ou plus de ces colorants.

4. Le produit colorant photostabilisé contient un colorant fluorescent et un Cucurbituril dans les concentrations appropriées pour photostabiliser le colorant fluorescent.

**5.** Le produit colorant de la Revendication 4, par lequel la concentration du colorant fluorescent soit un minimum de 100 pM et la concentration de Cucurbiturils soit 1 μM au minimum.

**6.** Le produit colorant de la Revendication 4 ou de la Revendication 5, par lequel le produit colorant soit un membre des produits suivants: une solution de colorant laser pour des lasers à colorant, une solution de référence pour des applications de spectroscopie, un dispositif de stockage optique et/ou utilisé dans des dispositifs d'affichage.

**7.** Lasers à colorant contenant un produit colorant de la Revendication 6.

**8.** Dispositif de stockage pour le stockage des données de la Revendication 6, composé de:

a) un support fixe, et
b) une couche mémoire pour l'enregistrement et récupération d'information, où la couche mémoire contient les unités de mémoire, contenant un colorant fluorescent et un Cucurbituril dans les concentrations appropriées pour photostabiliser le colorant fluorescent.

**9.** Dispositif d'affichage de la revendication 6, composé de :

a) une surface de visualisation avec composants d'affichage, où les composants d'affichage contiennent un colorant fluorescent et un Cucurbituril dans les concentrations appropriées pour photostabiliser le colorant fluorescent,
b) un dispositif d'irradiation pour irradier un composant d'affichage sélectionné avec une intensité d'irradiation adéquate pour déclencher un signal fluorescent, et
c) un dispositif réglementaire pour commander le dispositif d'irradiation de telle manière que selon l'information d'image lue par le dispositif réglementaire les composants d'affichage ou soient sélectivement irradiés ou pas, produisant de ce fait une image de fluorescence sur le dispositif d'affichage assortissant l'image originale.

**10.** Bloc de mémoire composé de:

a) une surface de mémoire avec des unités de mémoire, où les unités de mémoire contiennent un colorant fluorescent et un Cucurbituril, et
b) un dispositif d'irradiation pour irradier une unité de mémoire sélectionnée avec une intensité d'irradiation adéquate pour déclencher un signal fluorescent.

**11.** Une méthode pour écrire sur un dispositif de mémoire optique comme dans la Revendication 6 et/ou la Revendication 8, comprenant les étapes suivantes:

a) lire l'information à sauver, et
b) la destruction du colorant fluorescent et/ou du Cucurbituril aux unités de mémoire sélectionnées correspondant à l'information à sauver, permettant de ce fait la génération d'un ensemble des unités de mémoire avec la capacité de produire un signal fluorescent qui représente l'information à stocker.

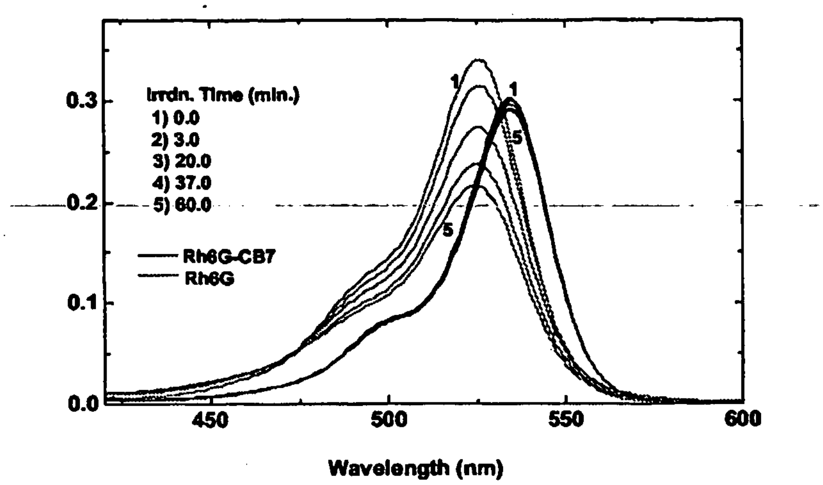
Irrdn. Time (min.)
1) 0.0
2) 3.0
3) 20.0
4) 37.0
5) 60.0
Rh6G-CB7
Rh6G
0.3
0.2
0.1
0.0
450
500
550
600
Wavelength (nm)

Fig. 1

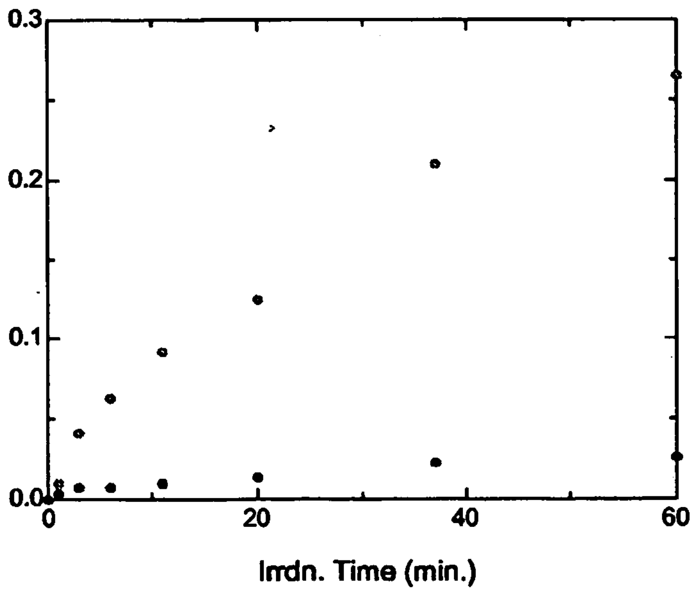
0.3
0.2
0.1
0.0
0
20
40
60
Irrdn. Time (min.)

Fig. 2

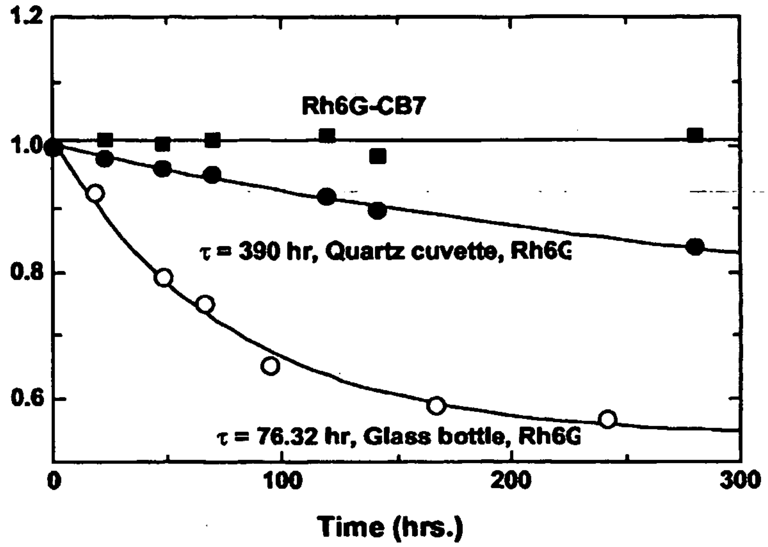
1.2
1.0
0.8
0.6
Rh6G-CB7
τ = 390 hr, Quartz cuvette, Rh6G
τ = 76.32 hr, Glass bottle, Rh6G
0
100
200
300
Time (hrs.)

Fig. 3

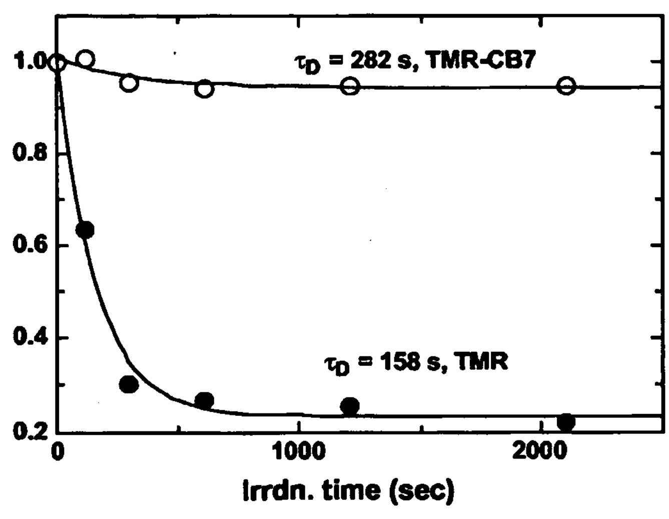
1.0
0.8
0.6
0.4
0.2
$\tau_D$ = 282 s, TMR-CB7
$\tau_D$ = 158 s, TMR
0
1000
2000
Irrdn. time (sec)

Fig. 4

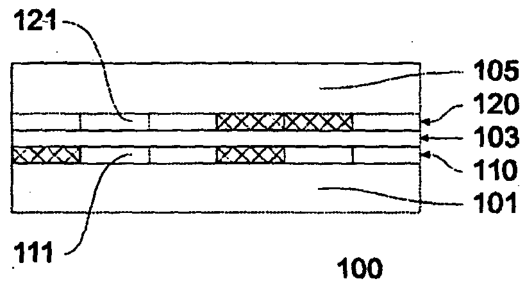


Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1094065 A
- US 5994143 A


### In der Beschreibung aufgeführte Nicht-Patentliteratur


- **W.A. FREEMAN ; W.L. MOCK ; N.-Y. SHIH.** Cucurbituril. *J. Am. Chem. Soc.,* 1981, vol. 103, 7367-7368
- **C. MARQUEZ ; F. HUANG ; W.M. NAU.** Cucurbiturils: Molecular Nanocapsules for Time-Resolved Fluorescence-based Analysis. *IEEE Trans. Nanobiosci.,* 2004, vol. 3, 39-45